# EUROPEAN PATENT APPLICATION

(11) **EP 1 705 778 A1**
(43) Date of publication of application: **27.09.2006**
(21) Application number: 05006649.7
(22) Date of filing: 24.03.2005
(51) Int. Cl.: H02K 5/08, H02K 5/22

(54) **Molded motor with stator grounding screw**

(71) Applicant: NIDEC SHIBAURA CORPORATION, Obama-city, Fukui 917-8588 (JP)
(72) Inventor: Yoshida, Hiroshi, Obama-city, Fukui 917-8588 (JP)
(74) Representative: Weber, Joachim

(57) **Abstract**

Moulded motor (10) with a stator core (12) that is wound with a coil (16) to form the stator (22) and then covered with moulded resin to make the housing (26), the rotor being held with two bearings (30,32) placed in the housing space inside the housing (26), each bearing being fixed to a metal bracket (24,38), and with an earthing electrode (40) connected to the stator core (12) through a bracket and housing. Since the earth electrode is fixed on the stator core and/or metal bracket, the electric current which is PWM-controlled dv/dt or distribution of ingredient of static capacity flows out through the earth electrode and then the bearing doesn't erode.

## Description

### Field of the invention

This invention concerns the molded motor.

### Background of the invention

Conventionally there has been the molded motor of which stator core is wound with coil to form the housing simultaneously the rotor is set inside the housing space via the bearing.

Regarding the aforementioned mold motor, since aforementioned mold motor is covered with mold resin, it has not been necessary to care about it. In the molded motor being high voltage and PWM control, however, it is conceivable that the bearing have electric erosion in the cause of dispersion of static electricity raised by the structure of the motor as well as voltage variance (dv/dt) by PWM control.

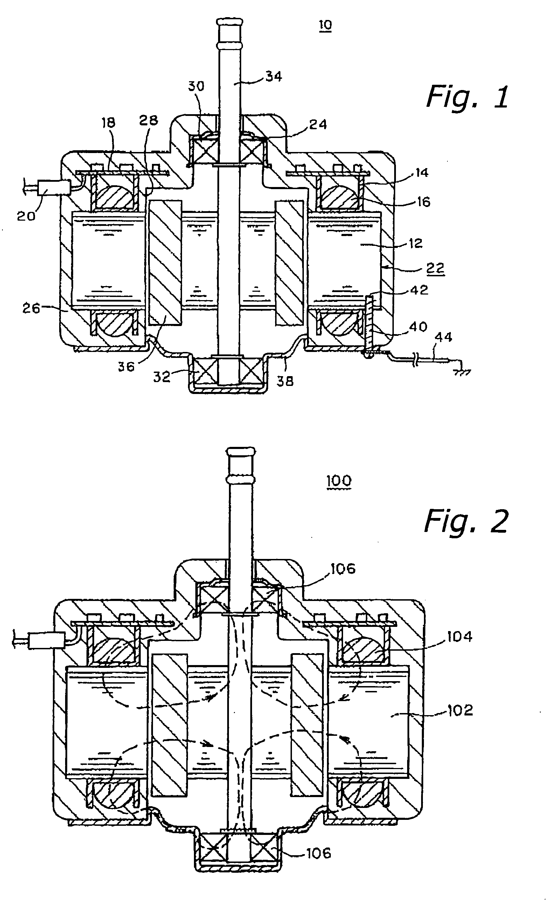

For instance, as shown in Fig.2, in the molded motor 100 which is high voltage and PWM control, and dielectric-constant unsaturated polyester is used for the mold resin, the electricity occurred by the aforementioned goes through the stator core 102, the stator coil 104, the bearings 106, the rotary axis 108, the rotor 110 to the stator core 102 as shown by the dot arrow circularly. In this case, the bearings 106 go into erosion.

This invention present the one that the bearing of the molded motor is not eroded.

### Disclosure of the invention

The invention according to Claim 1 is that in the molded motor of which stator core is wound with the coil to form the stator and then covered with the mold resin to make the housing, the rotor being held with a couple of bearings rotary in the housing space inside the foregoing housing, either foregoing bearings being fixed with the metal bracket, the earth electrode going to the foregoing stator core through the foregoing bracket and foregoing housing.

The invention according to Claim 2 is that foregoing mold resin is unsaturated polyester, and that in the molded motor of which stator core is wound with the coil to form the stator and then covered with the mold resin to make the housing, the rotor being held with a couple of bearings rotary in the housing space inside the foregoing housing, either foregoing bearings being fixed with the metal bracket and foregoing housing.

The invention according to Claim 3 is that the foregoing earth electrode is metal screw, and that the foregoing mold resin is unsaturated polyester, and that in the molded motor of which stator core is wound with the coil to form the stator and then covered with the mold resin to make the housing, the rotor being held with a couple of bearings rotary in the housing space inside the foregoing housing, either foregoing bearings being fixed with the metal bracket and foregoing housing.

The invention according to Claim 4 is that the foregoing molded motor is brushless DC motor to do PWM control, and that the foregoing mold resin is unsaturated polyester, and that the foregoing earth electrode is metal screw, and that in the molded motor of which stator core is wound with the coil to form the stator and then covered with the mold resin to make the housing, the rotor being held with a couple of bearings rotary in the housing space inside the foregoing housing.

According to the invention of Claim 1, since the earth electrode is fixed on the stator core and/or metal bracket, the electric current which is PWM-controlled dv/dt or distribution of ingredient of static capacity flows out through the earth electrode then the bearing doesn't erode.

According to the invention of Claim 2, even if the mold resin is unsaturated polyester that is high permittivity, it is possible to prevent from erosion of the bearings.

According to the invention of Claim 3, it is possible to fix the housing easily because the earth electrode is made of metal. Meanwhile, it is possible to substitute screw with pin or shaft.

According to the invention of Claim 4, it is possible to prevent from erosion even if erosion-prone PWM control is done by means of jointing the bracket and stator core by conduction of earth electrode such as metal screw and/or metal pin.

### Brief description of the drawing

Fig.1: Vertical section of the molded motor of this invention
Fig.2: Vertical section of the conventional molded motor

### Detailed description of the invention

Fig.1 is the vertical section of the molded motor of the embodiment. Molded motor 10 forms the pre-mold part 14, which is also the insulation layer, by preparing pre-mold on the cylindrical stator core 12 accumulated with steel plates. Then the coil 16 is wound on the pre-mold part 14.

The printed board 18 being provided the driving circuit of the molded motor 10 on the one part (upper part of the Fig.1) of the stator core 12. In this case, it is set on the pre-mold part 14 to fix with.

The connector 20 to send the signal outwardly is prepared from the printed board.

As mentioned above, the stator 22 wound the stator coil 16 on the stator core 12, printed board 18, connector 20 and the bracket 24 made of metal are housed in the tooling and then the housing 26 is formed with mold resin by forming it as an one component. In this case, they use high dielectric unsaturated polyester in example. The dielectric is defined with relative permittivity of proper substance multiplied vacuum permittivity so high dielectric is not less than 3 and unsaturated polyester is 5.3 to 7.5.

In the cylindrical housing space 28 of the housing 26 formed as above, the rotor 36 is housed being fixed the rotary axis 34 with the upper and lower bearings 30, 32.

After housing the rotor 36 in the housing space, the other size of metal saucer-like bracket 38 is hooked to be fixed with the housing 26 underside.

And screw-like earth electrode 40 goes from the outer circumference of the metal bracket 38 through the housing 26 to the stator core 12 and jointed by the screw.

There is fixed earth cord 44 to connect outwardly between the earth electrode 40 and the bracket 38.

In the meantime, this earth electrode is not to be connected electrically between the earth electrode 40 and the ground of the printed board 18.

In the molded motor 10 as structured above, even if it rotates by PWM control in the circuit for the printed board 18, dv/dt controlled by PWM control and/or the electricity that occurred by the distribution of the capacity of ingredients of static electricity flows out through the stator 12, earth electrode 40 and earth cord 44 to the outer side. Meanwhile, since the metal bracket 38 is connected to earth electrode 40, the electricity out of the bracket 38 flows out via earth electrode 40. Therefore, the bearing 30 and/or the bearing 32 are not affected by erosion as conventionally.

### Embodiment 1

In the aforementioned embodiment, brushless DC motor is explained taking the example of the molded motor 10 but other type of motor is applicable.

### Embodiment 2

In the aforementioned embodiment, the molded motor 10 is explained but in the place, even if the printed board 18 is prepared outside the housing 26 that means it is not built in.

## Claims

1. The invention according to Claim 1 is that in the molded motor of which stator core is wound with the coil to form the stator and then covered with the mold resin to make the housing, the rotor being held with a couple of bearings rotary in the housing space inside the foregoing housing, either foregoing bearings being fixed with the metal bracket, the earth electrode going to the foregoing stator core through the foregoing bracket and foregoing housing.

2. The invention according to Claim 2 is that foregoing mold resin is unsaturated polyester, and that in the molded motor of which stator core is wound with the coil to form the stator and then covered with the mold resin to make the housing, the rotor being held with a couple of bearings rotary in the housing space inside the foregoing housing, either foregoing bearings being fixed with the metal bracket and foregoing housing.

3. The invention according to Claim 3 is that the foregoing earth electrode is metal screw, and that the foregoing mold resin is unsaturated polyester, and that in the molded motor of which stator core is wound with the coil to form the stator and then covered with the mold resin to make the housing, the rotor being held with a couple of bearings rotary in the housing space inside the foregoing housing, either foregoing bearings being fixed with the metal bracket and foregoing housing.

4. The invention according to Claim 4 is that the foregoing molded motor is brushless DC motor to do PWM control, and that the foregoing mold resin is unsaturated polyester, and that the foregoing earth electrode is metal screw, and that in the molded motor of which stator core is wound with the coil to form the stator and then covered with the mold resin to make the housing, the rotor being held with a couple of bearings rotary in the housing space inside the foregoing housing.
